(19) Europäisches Patentamt
European Patent Office
Office européen des brevets

(11) Veröffentlichungsnummer: **0 178 298**
**B1**

# (12) EUROPÄISCHE PATENTSCHRIFT

(45) Veröffentlichungstag der Patentschrift: **04.10.89**

(51) Int. Cl.⁴: **G 01 P 3/36**

(21) Anmeldenummer: **84901326.3**

(22) Anmeldetag: **21.03.84**

(86) Internationale Anmeldenummer: **PCT/DE 84/00065**

(87) Internationale Veröffentlichungsnummer: **WO 85/04257 (26.09.85 Gazette 85/21)**

## (54) VERFAHREN UND VORRICHTUNG ZUR BERÜHRUNGSLOSEN BEWEGUNGSMESSUNG.

(43) Veröffentlichungstag der Anmeldung: **23.04.86 Patentblatt 86/17**

(45) Bekanntmachung des Hinweises auf die Patenterteilung: **04.10.89 Patentblatt 89/40**

(84) Benannte Vertragsstaaten: **AT BE CH DE FR GB LI LU NL SE**

(56) Entgegenhaltungen:
**DE-B-1 448 488**
**US-A-3 059 521**

**Feinwerktechnik und Messtechnik, Band 83, Heft 7, Oktober/November 1975, München (DE), P. Kreutzer: "Richtungserkennung bei berührungsloser Geschwindigkeitsmessung mit optischen Gittern", Seiten 330-332**

(73) Patentinhaber: **Dausmann, Günther, Dipl.- Ing., Schlachthausstrasse 9, D-8058 Erding (DE)**

(72) Erfinder: **Dausmann, Günther, Dipl.- Ing., Schlachthausstrasse 9, D-8058 Erding (DE)**

(74) Vertreter: **Weickmann, Heinrich, Dipl.- Ing., Patentanwälte Dipl.- Ing. H.Weickmann Dipl.- Phys.Dr. K.Fincke Dipl.- Ing. F.A.Weickmann Dipl.- Chem. B. Huber Dr.- Ing. H. Liska Dipl.- Phys.Dr. J. Prechtel Postfach 860820, D-8000 München 86 (DE)**

**EP 0 178 298 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft ein Verfahren zur berührungslosen Messung der Relativbewegung eines Gegenstandes gegenüber einem abtastbaren Muster.

Aus der DE-A-1 448 488 ist ein Verfahren dieser Art bekannt, bei welchem die Breite eines bewegten Körpers berührungslos gemessen werden kann. Die gegenstandsfeste Führungskurve wird von einem Kreis gebildet, welcher so dimensioniert ist, daß sich, bei stehendem Körper, eine kreisförmige Abtastbahn entlang der Körperoberfläche ergibt mit einem Durchmesser, welcher einerseits größer ist als die zu messenden Körperdimension und andererseits kleiner als die andere Dimension des Körpers. Der Körper wird daher längs zweier Kreisbogenstücke abgetastet zur Bildung zweier Abtastimpulse, deren Impulslänge der dem jeweiligen Kreisbogenabschnitt zugeordneten Abtastzeit entspricht. Nach Mittelwertbildung der Abtastzeiten beider Kreisbogenstücke wird durch trigonometrische Rechnung die gewünschte Körperdimension errechnet. Es kann auch eine zweifache Abtastung längs zweier voneinander beabstandeter Kreise vorgenommen werden (Fig. 2). Zur Erzeugung der Abtastbahn bzw. Abtastbahnen werden rotierende Spiegel eingesetzt. Das bekannte Verfahren eignet sich weder zur Richtungsbestimmung noch zur Bestimmung der zurückgelegten Wegstrecke.

Aus der US-A-3 059 521 ist ein Verfahren zur berührungslosen Messung der Relativbewegung eines Gegenstandes gegenüber einem abtastbaren Muster bekannt, bei welchem zwei Abtastköpfe an einer mit dem Gegenstand bewegten, rotierenden Scheibe angebracht sind. Jeder Abtastkopf weist ein Strichgitter im Strahlengang auf zur entsprechenden Modulation des Abtastsignals. Aus den gemessenen Modulationsfrequenzen der Abtastsignale der beiden Abtastköpfe läßt sich die Relativgeschwindigkeit sowie der Höhenabstand des Gegenstands gegenüber dem das abtastbare Muster aufweisenden Boden ermitteln. Die Abtastbahn wird also durch das jeweilige Gitter bestimmt; eine zusammenhängende und punktweise durchlaufene Führungskurve liegt hier nicht vor.

Der Erfindung liegt die Aufgabe zugrunde, ein Verfahren der eingangs genannten Art anzugeben, mit Hilfe dessen die Relativbewegung zwischen dem Gegenstand und dem Muster erfaßt werden kann.

Diese Aufgabe wird durch die Merkmale des Ansprüche 1 und 4 gelöst.

Dem erfindungsgemäßen Verfahren liegt die Erkenntnis zugrunde, daß sich bei einer Abtastung des Abtastmusters längs des Abtastweges als Überlagerung der Relativbewegung von Gegenstand und Muster und der Abtastbewegung längs der gegenstandsfesten Führungskurve sich ein spezifisches Abtastsignal ergibt, bei welchem der Zeitabstand zwischen aufeinanderfolgenden Abtastimpulsen vom Winkel zwischen dem Radialstrahl und der Relativbewegungsrichtung von Gegenstand und Muster in vorgegebener Weise abhängt. Beträgt dieser Absolutwinkel beispielsweise 90°, was im Falle einer kreisförmigen Führungskurve bedeutet, daß die momentane Bewegungsrichtung des Abtaststrahls längs der Führungskurve zur Relativbewegungsrichtung parallel verläuft, so erhält man ein Abtastsignal mit besonders schnell bzw. besonders langsam aufeinanderfolgenden Abtastimpulsen, je nachdem, ob der Abtastweg momentan entgegen dem Relativbewegungsrichtung oder in dieser Richtung abgetastet wird. Das Dichtesignal nimmt in diesem Falle ein Maximum bzw. ein Minimum ein. Bei einem Absolutwinkel von 0° ergibt sich ein mittlerer Wert des Dichtesignals, dem im Falle einer gleichförmigen Bewegung des Abtaststrahles längs eines Teil- oder Vollkreises ein Wendepunkt des im wesentlichen sinusförmigen Dichtesignals entspricht. Aus der Phasenlage des Dichtesignals gegenüber der Führungsfunktion läßt sich folglich ohne weiteres der gesuchte, im folgende als Bewegungsrichtungswinkel bezeichnete Winkel zwischen der gegenstandsfesten Bezugsrichtung und der Richtung der Bewegung des Musters relativ zum Gegenstand feststellen.

In besonders einfacher Weise läßt sich der Bewegungsrichtungswinkel unmittelbar dadurch feststellen, daß man einen Wendepunkt des Dichtesignals ermittelt, sowie den diesem Wendepunkt zugeordneten Führungswinkel. Da in diesem Falle der Absolutwinkel 0° ist, ist der gesuchte Bewegungsrichtungswinkel identisch mit dem Führungswinkel.

Das erfindungsgemäße Verfahren eignet sich sowohl für periodische Muster (z. B. Punktmuster) wie auch für Muster mit statistisch verteilten Musterstrukturelementen. In letzterem Falle ist es zweckmäßig, bei der Bildung des Dichtesignals eine Mittelung der Zeitabstandswerte vorzunehmen über einen im Vergleich zur Abtastzeitdauer kleinen Mittelungszeitraum, um eine der Sinusform besser angenäherte und damit besser weiterverarbeitbare Dichtesignalform zu erhalten.

Das Vorzeichen der Bewegungsrichtung des Musters gegenüber dem Gegenstand läßt sich in einfacher Weise dadurch ermitteln, daß man feststellt, ob auf den Wendepunkt des Dichtesignals ein Dichtesignalminimum oder -maximum folgt. In ersterem Falle bewegt sich das Muster relativ zum Gegenstand in der gleichen Richtung wie der Abtaststrahl längs der Führungskurve, d. h. relativ zum Gegenstand.

Erfindungsgemäß läßt sich bei bekannten oder in der vorstehenden Weise ermittelter Bewegungsrichtung der vom Muster relativ zum Gegenstand zurückgelegte Weg mit einfachen Mitteln durch die Merkmale des Anspruchs 4 ermitteln.

Voraussetzung für ein einigermaßen genaues Ergebnis für die zurückgelegte Wegstrecke ist lediglich, daß die Verteilung der Musterstrukturelemente bezogen auf die Länge des Führungskurvenstücks einigermaßen konstant ist. Es können folglich auch Muster mit entsprechend statistisch verteilten Musterstrukturelementen zur Wegstreckenmessung herangezogen werden, wenn auch periodische Muster zu genaueren Ergebnissen führen. In letzterem Falle können die beiden Führungskurvenstücke auch von zur Richtung der Bewegung des Musters gegenüber dem Gegenstand parallelen geraden Kurvenabschnitten gebildet sein.

Gerätetechnisch besonders einfach läßt sich das Verfahren bei periodischen Mustern dann durchführen, wenn die beiden Führungskurvenstücke von Halbkreisbögen gebildet werden, die sich zu einem Kreis ergänzen, wobei der die Bogenenenden verbindende Durchmesser zur Bewegungsrichtung des Musters gegenüber dem Gegenstand im wesentlichen parallel ist.

Im Falle eines Musters mit mehr oder weniger gleichmäßig verteilten Musterstrukturelementen verringert sich der Meßfehler entscheidend, wenn die beiden Führungskurvenstücke von zwei sich im wesentlichen deckenden Halbkreisbögen gebildet sind mit entsprechender Orientierung des die Bogenenden verbindenden Durchmessers. Bei dem Rückweg des Abtaststrahles längs des Halbkreisbogens tastet dieser ein Abtastbahnstück auf dem Muster ab, welches sich entsprechend dem Verhältnis von Relativbewegungsgeschwindigkeit des Gegenstands zur Bewegungsgeschwindigkeit des Abtaststrahls längs der Führungskurve nur geringfügig oder etwas mehr von dem Abtastbahnstück des Hinweges unterscheidet.

Voraussetzung für die Wegstreckenmessung durch Abtastung längs der Halbkreisbögen ist, daß der die Bogenenden verbindende Durchmesser parallel zur Bewegungsrichtung des Musters gegenüber dem Gegenstand ist. Für den Fall, daß die Richtung der Relativbewegung vom Muster und Gegenstand vorgegeben konstant ist, ergeben sich keine Schwierigkeiten. Für den Fall wechselnder Relativbewegungsrichtungen kann die jeweilige momentane Richtung, beispielsweise durch das eingangs genannte Verfahren bestimmt werden, woraufhin dann die Halbkreisbögen entsprechend zu orientieren sind. Werden beispielsweise Halbblenden zur Festlegung der Halbkreisbögen verwendet, so müssen diese entsprechend der momentanen Bewegungsrichtung in ihre Raumlage nachgesteuert werden.

In einer Weiterbildung der Erfindung erübrigt sich ein derartiges Nachsteuern mechanischer Elemente. Dies wird dadurch erreicht, daß man die Abtastung gegenläufig entlang einer geschlossenen, vorzugsweise kreisförmigen Führungskurve durchführt, daß man von den mittels der beiden Abtaststrahlen erzeugten beiden Abtastsignalen jeweils das Dichtesignal ableitet und dessen Phasenlage bestimmt, und daß man bei einem der Dichtesignale die beiden zeitlich vor und nach einem Dichtesignalmaximum liegenden Dichtesignalwendepunkte sowie die Anzahl der Abtastimpulse zwischen diesen Wendepunkten ermittelt und daß bei dem anderen Dichtesignal die beiden vor und nach einem Dichtesignalminimum liegenden Dichtesignalwendepunkte sowie die Anzahl der Abtastimpulse zwischen diesen Wendepunkten ermittelt. Es wird demnach das Muster zweifach abgetastet, wobei die beiden Abtaststrahlen längs identischer kreisförmiger Führungskurven geführt werden jedoch mit entgegengesetzter Laufrichtung. Aus den beiden Abtastsignalen werden zwei Dichtesignale abgeleitet und bei dem einen die das Dichtesignalmaximum enthaltende Sinus-Halbperiode bestimmt und beim anderen die das Minimum enthaltende Halbperiode. Diesen beiden Halbperioden entsprechen wiederum sich deckende Halbkreisbogenstücke, wobei der die Bögenenden verbindende Durchmesser zur Bewegungsrichtung des Musters gegenüber dem Gegenstand parallel ist. Aus der Anzahl der während der einen bzw. der anderen Halbperiode auftretenden Abtastsignale läßt sich folglich die vom Muster gegenüber dem Gegenstand zurückgelegte Wegstrecke ermitteln.

Es ist denkbar, daß das Muster magnetische, oder elektrostatische oder radioaktive Musterelemente usw. enthält, die durch dementsprechend ausgebildete Wandler abzutasten sind. Besonders einfach läßt sich das Verfahren durchführen, wenn man das Muster optisch abtastet.

Die Erfindung betrifft ferner eine Vorrichtung zur berührungslosen Messung der Relativbewegung eines Gegenstands gegenüber einem abtastbaren Muster zur Durchführung der vorstehend beschriebenen Verfahren, welche durch wenigstens eine rotierenden Lochblende im Strahlengang wenigstens einer Abtastoptik gekennzeichnet ist, welche Blende den Abtaststrahl durch entsprechendes Ausblenden eines Bildausschnittes festlegt.

Aus dem Artikel R. Arzt und H. Ringelhahn "Optische Sensoren zur berührungslosen und schlupffreien Weg- und Geschwindigkeitsmessung an Landfahrzeugen" Zeitschrift Feinwerktechnik und Meßtechnik 1978, Heft 2, Seite 69 bis 71 ist es zwar an sich bekannt, bei einer Vorrichtung dieser Art ein rotierendes Element im Strahlengang einer Abtastoptik anzuordnen (Bild 10). Hierbei handelt es sich jedoch um eine rotierende Prismengitterscheibe, welche einen Abtaststrahl periodisch unterbricht, wobei der Abtaststrahl ortsfest gegenüber dem die rotierende Prismenscheibe tragenden Gegenstand verläuft, im Gegensatz zur Erfindung, bei der der Abtaststrahl durch die Blende in rotierende Bewegung relativ zum Gegenstand versetzt wird.

Optisch besonders einfacher Aufbau ergibt sich erfindungsgemäß dadurch, daß ein Lichtsensor im bildseitigen Brennpunkt der Abtastoptik vorgesehen ist, welcher vorzugsweise mit einem Photoelement gebildet sein kann. Der Photostrom des Photoelements ergibt, nach entsprechender Verstärkung, unmittelbar das Abtastsignal.

Insbesondere bei Mustern mit statistisch verteilten Musterstrukturelementen ist es von Vorteil, das Muster längs sich deckender Kurvenbahnstücke zur Richtungsmessung und/oder Wegstreckenmessung abzutasten. Hierzu wird erfindungsgemäß eine Anordnung zur Bildverdopplung vorgesehen mit einem gegenüber der optischen Achse der Abtastoptik geneigten teildurchlässigen Spiegel und einem zu diesem benachbart und parallel angeordneten vollreflektierenden Spiegel im Strahlengang dieser oder einer weiteren Abtastoptik.

Um identische halbkreisbogenförmige Abtastbahnstücke zu erhalten, wird vorgeschlagen, daß je eine rotierende Loch blende und eine die Lochblende halb abdeckende lichtundurchlässige Halbblende im Strahlengang zwischen dem teildurchlässigen Spiegel und dem zugeordneten Lichtsensor und im Strahlengang zwischen dem vollreflektierenden Spiegel und dem zugeordneten Lichtsensor vorgesehen ist, und daß die Lochblenden gegenläufig rotieren um das Muster entlang im wesentlichen identische halbkreisförmiger Führungskurven abzutasten. Hierbei reicht es, wenn man einen beiden Lochblenden zugeordneten Lichtsensor einsetzt. Der optische Aufbau vereinfacht sich, wenn man beiden Lochblenden ebenfalls nur eine Abtastoptik zuordnet.

Zur Abtastung des Musters längs im wesentlichen identischer Vollkreise ist erfindungsgemäß vorgesehen, daß je eine rotierende Lochblende im Strahlengang zwischen dem teildurchlässigen Spiegel und einem ersten Lichtsensor und im Strahlengang zwischen dem vollreflektierenden Spiegel und einem zweiten Lichtsensor vorgesehen ist und daß die Lochblenden gegenläufig rotieren und zwei Abtaststrahlen um das Muster entlang zwei im wesentlichen identisch, vollkreisförmiger Führungskurven abzutasten. Von den auf diese Weise erhaltenen beiden Abtastsignalen werden gemäß dem entsprechend vorstehend erwähnten Verfahren zwei Dichtesignale abgeleitet und die Anzahl der während der entsprechenden Halbperioden des Dichtesignals auftretenden Abtastimpulse ermittelt und durch Quotientenbildung hieraus die Wegstrecke abgeleitet.

Durch entsprechende zeitliche Differenzierung der ermittelten Wegstrecke läßt sich problemlos die Relativbewegungsgeschwindigkeit des Musters gegenüber dem Gegenstand ableiten.

Die Erfindung wird im folgenden an mehreren Ausführungsbeispielen erläutert. Es zeigt:

- Fig. 1 eine Schemaansicht einer ersten Ausführungsform der erfindungsgemäßen Vorrichtung zur berührungslosen Bewegungsmessung;
- Fig. 2 eine Draufsicht auf das Muster unterhalb der Lochblende der Vorrichtung gemäß Fig. 1;
- Fig. 3 das vom Photoelement der Vorrichtung gemäß Fig. 1 abgegebene Abtastsignal;
- Fig. 4 das aus dem Abtastsignal abgeleitete Dichtesignal;
- Fig. 5 die Führungswinkelfunktion;
- Fig. 6 eine Draufsicht auf ein periodisches Muster unterhalb einer Lochblende ähnlich Fig. 2;
- Fig. 6A das sich bei Abtastung des Musters gemäß Fig. 6 ergebende Dichtesignal;
- Fig. 7 eine zweite Ausführungsform der erfindungsgemäßen Vorrichtung;
- Fig. 8 eine Draufsicht auf die rotierenden Blenden der Vorrichtung gemäß Fig. 7 (Pfeil VIII in Fig. 7);
- Fig. 8A die von der Vorrichtung gemäß Fig. 7 erzeugte Abtastbahnkurve bei stehendem Muster;
- Fig. 9 eine weitere Ausführungsform der erfindungsgemäßen Vorrichtung; und
- Fig. 9A die von der Vorrichtung gemäß Fig. 9 bei stehendem Muster erzeugte Abtastkurvenbahn.
- Fig. 9B die sich bei der Abtastung mittels der Vorrichtung gemäß Fig. 9 ergebenden beiden Dichtesignale.

Mittels der in Fig. 1 grobschematisch dargestellten Vorrichtung 10 zur berührungslosen Bewegungsmessung läßt sich, wie nachfolgend näher erläutert werden wird, mit einfachen baulichen Mitteln schnell und zuverlässig die Bewegung des in Fig. 1 unten angedeuteten Musters 12 relativ zu einem die Vorrichtung 10 tragenden mit unterbrochener Umrißlinie angedeuteten Gegenstand 14 messen. In Fig. 1 ist der Gegenstand 14 als stationär angenommen; der Gegenstand kann sich jedoch auch seinerseits gegenüber dem Muster 12 bewegen, da erfindungsgemäß die Relativbewegung, insbesondere die Richtung der Relativgeschwindigkeit v des Musters 12 gegenüber dem Gegenstand 14, sowie die Relativverschiebungsstrecke s gemessen wird. Die Bewegungsrichtung des Musters 12 gegenüber dem Gegenstand 14 kann z. B. in einem gegenstandsfesten Bezugssystem durch den in Fig. 2 eingezeichneten Winkel $\alpha$ zwischen der Richtung des Geschwindigkeitsvektors v und einer gegenstandsfesten Bezugsrichtung 16 festgelegt werden. Dieser Winkel $\alpha$ kann erfindungsgemäß schnell und einfach ermittelt werden, ferner das Vorzeichen der Bewegungsrichtung, daneben auch der vom Gegenstand 14 relativ zum Muster 12 zurückgelegte Weg und schließlich auch der Betrag der Bewegungsgeschwindigkeit v.

Hierfür benötigt die Vorrichtung 10 neben einer in Fig. 1 blockdiagrammartig dargestellten Auswerteschaltung 18 lediglich eine rotierende Lochblende 20, eine in Fig. 1 durch eine Sammellinse symbolisierte Abbildungsoptik 22 mit Brennweite f' sowie ein Photoelement 24 im Brennpunkt der Abbildungsoptik 22.

Die Lochblende 20 ist mit einem Blendenloch 30 versehen, welches von der mit der optischen Achse 15 der Abbildungsoptik zusammenfallenden Rotationsachse der Lochblende 20 einen Abstand r aufweist. Das Loch 30 beschreibt daher bei der Rotation der Lochblende 20 (in Fig. 2 im Uhrzeigersinn) mit der Winkelgeschwindigkeit $\omega$

im gegenstandsfesten Bezugssystem einen Kreis 48 mit Radius r. Der vom Kreismittelpunkt 48a ausgehende, das Loch zentral schneidende Radialstrahl 50 schließt einen Winkel β mit der Bezugsrichtung 16 ein. Der Winkel zwischen dem Radialstrahl 50 und der Richtung der Geschwindigkeit v ist in Fig. 2 mit γ bezeichnet. In der momentanen Blendenstellung gemäß Fig. 2 ergibt sich der Betrag des Winkels α aus der Summe der Beträge der Winkel β und γ.

Die Abbildungsoptik 22 bildet den vom Loch 30 der Lochblende 20 jeweils ausgeschnittenen Bereich (Musterausschnitt) des Musters 12 auf das Photoelement 24 ab. Das Muster 12 kann aus statistisch verteilten unregelmäßig angeordneten Streifen 12a bestehen, welche sich von einem Untergrund dadurch abheben, daß sie entweder heller oder dunkler sind. Das Muster 12 kann auch ein andersartiges unregelmäßiges Muster sein, wie z. B. ein Punktmuster. Bedingung ist lediglich, daß das Muster 12 in dem vom Kreis 48 definierten Ausschnitt bezüglich des Abstandes der einzelnen Musterstrukturelemente (hier Streifen 12a) einigermaßen gleichmäßig auf die Fläche verteilt ist.

Bei ruhendem Muster 12 gegenüber dem Gegenstand 14 und mit der Winkelgeschwindigkeit ω drehender Lochblende 20 ergibt sich eine kreisförmige Abtastbahn auf dem Muster 12. Es werden also nacheinander die von der Abtastbahn erfaßten Musterstrukturelemente (hier Streifen 12a) abgetastet. Das Photoelement 24 gibt in der Folge, ggf. nach entsprechender Verstärkung und Durchgang durch eine Impulsformerstufe, ein Abtastsignal g ab, aus einer Reihe von Einzelimpulsen, den Abtastimpulsen, die den einzelnen abgetasteten Musterstrukturelementen entsprechen. Der Zeitabstand Δt variiert während eines Umlaufs der Musterverteilung gemäß statistisch.

Wird nun das Muster 12 gegenüber dem Gegenstand 14 in Richtung des Geschwindigkeitsvektors v in Bewegung gesetzt, so ergibt sich eine entsprechende Modulierung des Abtastsignals f, da nunmehr die Abtastbahn auf dem Muster 12 zykloidförmig ist. Der Betrag der Umfangsgeschwindigkeit ω · r ist dabei stets größer gewählt als der Betrag der Geschwindigkeit v. In Fig. 2 sind im gegenstandsfesten Bezugssystem vier momentane Abtastpositionen des Lochs 30 der Blende 20 und damit des durch das Loch 30 definierten Abtaststrahles 31 mit A, B, C und D bezeichnet, die mit der Richtung der Geschwindigkeit v einen Winkel γ von 0° bzw. 90° bzw. 180° bzw. 270° einschließen. In den Punkten A und C verläuft die momentane Bewegungsrichtung des Lochs 30, d. h. des Abtaststrahls 31, längs des gegenstandsfesten Kreises 48 senkrecht zur Richtung v; in den Punkten B und D bewegt sich der Abtaststrahl längs des Kreises 48 in gleicher Richtung wie das Muster 12 gegenüber dem Gegenstand 14 bzw. in entgegengesetzter Richtung. Es ist ersichtlich, daß im Punkt D der Abtaststrahl pro Zeiteinheit aufgrund der gegenläufigen Bewegung von Abtaststrahl und Muster wesentlich mehr Musterstrukturelemente abgetastet werden als im Punkt B, bei welchem der Abtaststrahl in gleicher Richtung, wenn auch mit größerer Geschwindigkeit, wandert, wie das Muster 12 gegenüber dem Gegenstand 14. Man erhält dementsprechend ein Abtastsignal mit entsprechend der Kreisfreguenz ω modulierten reziproken Zeitabständen 1/Δt aufeinanderfolgender Impulse, wie dies grobschematisch in der Fig. 3 angedeutet ist. Die übereinander angeordneten Fig. 3, 4 und 5 haben identische Zeitskala. Man erkennt, daß an den in Fig. 4 eingetragenen Punkten B und D der reziproke Zeitabstand $g_i$ aufeinanderfolgender Abtastimpulse $f_i$ minimal bzw. maximal ist. Trägt man gemäß Fig. 4 an aufeinanderfolgenden gleichabständigen Zeitpunkten $t_1$, $t_2$, $t_3$ usw. den mittleren reziproken Zeitabstand aufeinanderfolgender Impulse innerhalb des gerade beendeten Intervalls auf und verbindet man diese Punkte $g_1$, $g_2$, $g_3$ usw., so erhält man die in Fig. 4 mit g bezeichnete Kurve, welche im folgenden "Dichtesignal" genannt wird. Dieses Dichtesignal folgt im wesentlichen einer Sinuskurve überlagert von statistischen Schwankungen aufgrund der statistischen Ortsverteilung der Musterstrukturelemente. Das Minimum dieses sinusförmigen Modulationsanteils liegt im Punkt B, das Maximum im Punkt D und die Wendepunkte in den Punkten C und A. Falls erforderlich, kann man aus dem statistisch schwankenden Signal die Modulationskomponente zur weiteren Verarbeitung ausfiltern.

In Fig. 5 ist der Zeitverlauf des Winkels β zwischen der Bezugsrichtung und dem durch den Abtaststrahl führenden Radialstrahl 50 angegeben. Aufgrund der gleichmäßigen Kreisfrequenz ω ergibt sich ein Dreiecksstufenverlauf. Zur Ermittlung des gesuchten Bewegungsrichtungswinkels α zwischen der Bezugsrichtung 16 und der Richtung der Geschwindigkeit v ist nunmehr lediglich die Phasenverschiebung des Dichtesignals g gegenüber der als Führungswinkelfunktion h bezeichneten Kurve in Fig. 5 zu ermitteln. Aus Fig. 2 ist ersichtlich, daß der einen der Wendepunkte des Dichtesignals g bildende Zeitpunkt A, der der Position A gemäß Fig. 2 entspricht, derjenige Punkt ist, bei dem der gesuchte Winkel α gleich dem Winkel β ist. Gemäß Fig. 5 beträgt β in diesem Punkte beispielsweise 45°. Das Muster 12 bewegt sich demnach gegenüber dem Gegenstand 14 in einem Winkel von 45° gegenüber der gegenstandsfesten Bezugsrichtung 16.

Zur Bestimmung des Winkels α können natürlich auch die Extrema der Sinusform des Dichtesignals g herangezogen werden, wobei dann vom entsprechenden Winkel β 90° bzw. 270° abzuziehen sind.

Die Auswerteschaltung 18 mit Hilfe deren die Richtungsbestimmung durchgeführt werden kann, umfaßt einen Block 52, welcher das Abtastsignal f abgibt und hierzu bedarfsweise das vom Photoelement 24 abgegebene elektrische Signal verstärkt und in Impulsform bringt. Es

folgt ein Block 54, welcher aus dem Abtastsignal f das Dichtesignal g gemäß Fig. 4 ableitet. Im nächstfolgenden Block 56 wird die Phasenlage des Dichtesignals g bestimmt, beispielsweise dadurch, daß man die Wendepunkte A und C der Sinusform der Dichtefunktion g ermittelt. Ein Block 60, welcher über eine Leitung 59 vom Motor 32 die Information über die jeweilige momentane Drehstellung der Blende 20 erhält, bildet die Führungswinkelfunktion h gemäß Fig. 5. Ein Block 58 stellt z. B. mit Hilfe einer Koinzidenzschaltung fest, welcher momentane Winkel $\beta$ dem einen oder dem anderen Wendepunkt A bzw. C entspricht. Dieser Winkel ist dann der gesuchte Bewegungsrichtungswinkel $\alpha$.

Zu den Fig. 2 und 4 ist noch nachzutragen, daß mit den Buchstaben a, b, c und d diejenigen Momente angegeben sind, in denen der Abtaststrahl 31 der Reihe nach einen Winkel $\beta$ von 0°, 90°, 180° bzw. 270° mit der Bezugsrichtung 16 bildet.

In Fig. 6 ist ein Streifenmuster 12' dargestellt aus parallel zueinander periodisch angeordneten Streifen 12a', deren Streifenbreite und Streifenabstand im wesentlichen konstant ist. Wird dieses Streifenmuster gemäß Fig. 1 bis 5 durch eine rotierende Lochblende abgetastet, so kann man in folgender Weise einfach und schnell und unter geringem apartiven Aufwand die vom Muster 12' gegenüber dem Gegenstand jeweils zurückgelegte Wegstrecke ermitteln. Bei einer Bewegung des Loches 30 aus der Position C längs des Kreises 48 wiederum in die Position C beschreibt der Abtaststrahl auf dem Streifenmuster die in Fig. 6 strichpunktiert angedeutete Abtastbahn 49. Der dem Punkt A im gegenstandsfesten Bezugsystem entsprechende Punkt A' der Abtastbahn ist gegenüber dem Punkt A um die während der Halbperiode vom Muster gegenüber dem Gegenstand zurückgelegten Wegstrecke s nach außen hin verschoben. Dementsprechend tastet der Abtaststrahl eine Anzahl M von Streifen 12a' ab, welche proportional ist zu 2r + s. Am Ende der nächsten Halbperiode gelangt der Abtaststrahl zum Punkt C' der Abtastbahn 49, welcher dem Punkt C des gegenstandsfesten Kreises 48 entspricht. Die Anzahl N der während dieser Halbperiode abgetasteten Streifen 12a' entspricht dem Ortsabstand von A' und C' also dem Wert 2r - s. Hieraus ergibt sich der innerhalb einer Halbperiode vom Muster gegenüber dem Gegenstand zurückgelegte Weg s wie folgt:

$$s = \frac{M - N}{M + N} \cdot 2r.$$

Zur Wegmessung muß man demnach lediglich das Abtastsignal f aufnehmen und die Anzahl M und N der Abtastimpulse feststellen, die zwischen zwei Durchgängen des Abtaststrahls durch den zur Geschwindigkeit v parallelen Kreisdurchmesser (Punkte A und C) nacheinander auftreten. Legt man die Bezugsrichtung 16 parallel zur Richtung v, die wiederum senkrecht zur Richtung der Streifen 12a' verläuft, so entsprechen den Punkten A und C die Winkel $\beta$ von 0° und 180°.

Es ist ersichtlich, daß man bei von 90° abweichendem Winkel zwischen der Streifenlängsrichtung und der Geschwindigkeit v eine Wegstrecke s' errechnet, die proportional ist zu Sinus $\Delta$, wobei $\Delta$ der Winkel zwischen der Streifenlängsrichtung und der Bewegungsrichtung v ist.

Entsprechend dem eingangs anhand der Fig. 1 bis 5 beschriebenen Verfahren läßt sich auch bei linear-periodischem Streifenmuster gemäß Fig. 6 der Winkel zwischen einer gegenstandsfesten Bezugsrichtung und der Bewegungsrichtung v feststellen. Das hierbei aus dem Abtastsignal f abgeleitete Dichtesignal g weicht jedoch von der Form:

$$C_1 \cdot \sin(\omega + C_2) + C_3 \text{ (gemäß Fig. 4)}$$

ab, da dieser noch die Funktion

$$C_4 \cdot |\sin(\omega t + C_2)|$$

überlagert ist. Letztere rührt davon her, daß das Abtastsignal und damit das Dichtesignal bereits bei ruhendem Muster moduliert ist, da bei dem Durchgang des Abtaststrahls durch die Punkte C und A mit momentaner Strahlbewegungsrichtung parallel zur Streifenlängsrichtung momentan ein sehr langsamer Streifenwechsel festgestellt wird, wohingegen in den Punkten B und D der Streifenwechsel vergleichsweise rasch erfolgt. Bei der bewegungsbedingten Überlagerung dieses Anteils mit dem sinusförmigen Anteil ähnlich Fig. 4 ergibt sich beispielsweise die in Fig. 6A angedeutete Form des Dichtesignals g, wobei punktiert der bereits bei stehendem Muster auftretende Signalanteil angedeutet ist. Die Lage der Maxima der beiden Halbperiodenteilkurven A - C und C - A entspricht genau den Punkten B und D, so daß diese Maxima bevorzugt zur Bestimmung des Richtungswinkels $\alpha$ heranzuziehen sind. Man kann jedoch auch die Punkte A und C verwenden.

Die vorstehend beschriebene Art der Messung des vom Muster relativ zum Gegenstand zurückgelegten Weges läßt sich auch bei einem Muster mit statistisch gleichmäßig auf die Fläche verteilten Musterstrukturelementen, z. B. gemäß Fig. 2, durchführen. Die Anzahl der bei einer Bewegung des Abtaststrahles vom Punkt C zum Punkt A abgetasteten Musterstrukturelemente ist proportional zur Länge des entsprechenden Bahnkurvenstücks C - A' gemäß Fig. 6. Die Länge dieses Bahnkurvenstücks ist bei Wegstrecken s klein gegenüber r angenähert proportional zu 2r + s; dementsprechend ist die Länge des Bogenstücks A' - C' der Abtastbahn proportional zu 2r - s, so daß man für die während einer Halbperiode zurückgelegte Wegstrecke s denselben Ausdruck wie für das Streifenmuster erhält.

In den Fig. 7 und 8 ist eine mit 110 bezeichnete Ausführungsform der erfindungsgemäßen Vorrichtung dargestellt, die zur Wegstreckenbestimmung bei Mustern mit statistisch verteilten Musterstrukturelementen bestimmt ist. Ähnlich wie in Fig. 1 besteht die Vorrichtung 110 aus einer

durch eine Sammellinse 122 symbolisierten Abtastoptik einer Brennwerte f', in derem bildseitigen Brennpunkt ein Photoelement 124 angeordnet ist. Zwischen Muster 12 und Abtastoptik ist eine Anordnung zur Bildverdoppelung vorgesehen, aus einem gegenüber der optischen Achse 114 geneigten teildurchlässigen Spiegel 160 und einem zu diesem benachbart und parallel angeordneten vollreflektierenden Spiegel 162. Der obere Querrand 160a sowie der untere Querrand 162a der beiden Spiegel 160, 162 liegen übereinander und bilden mit der optischen Achse 114 einen rechten Winkel. Der unterhalb des in Fig. 7 rechten halbdurchlässigen Spiegels 160 gelegene Teil des Musters 12 kann somit zum einen in Durchsicht durch den Spiegel 160 unmittelbar durch eine darüberliegende rotierende Abtastscheibe 120a abgetastet werden und zum anderen nach zweifacher Spiegelung an den Spiegel 160 und 162 durch eine zweite oberhalb des Spiegels 162 angeordnete Lochblende 120b. Die Lochblende 120a wird von einem Motor 132a in Bewegung versetzt, wobei die Drehachse etwa mittig oberhalb des Spiegels 160 angeordnet ist und mit Abstand parallel zur optischen Achse 114 verläuft. In gleichem Abstand jedoch auf der in Fig. 1, 7 linken Seite der optischen Achse 114 verläuft die Drehachse des die Scheibe 120b antreibenden Motors 132b. Wie die Draufsicht der Fig. 8 zeigt, rotieren die beiden Lochblenden 120a und 120b gegenläufig und zwar mit gleicher Frequenz ω. Der Abstand r des jeweiligen Loches 130 von der Drehachse ist in beiden Fällen gleich. Jeweils die gleiche Hälfte (in den Fig. 7 und 8 die linke Hälfte) der beiden Lochblenden wird von einer Halbblende 170a bzw. 170b abgedeckt, die sich z. B. zwischen der jeweiligen Lochblende und dem Lichtsensor 124 befindet. Die jeweils rechten Ränder 172a bzw. 172b schneiden die jeweilige Lochblendendrehachse und beide Ränder liegen zueinander parallel in horizontaler Ebene.

Die beiden Lochblenden 120a, 120b werden derart miteinander synchronisiert angetrieben, daß die Löcher 130a bzw. 130b jeweils gleichzeitig die Ränder 127a bzw. 127b, wenn auch in entgegengesetzter Richtung, überstreichen. Das Photoelement 124 empfängt daher während einer Halbperiode der synchronisierten Rotationsbewegung beider Lochblenden, z. B. durch das Loch 130a, hindurchgehendes, vom Muster 12 ausgehendes Licht und während der nachfolgenden Halbperiode durch das andere Loch 130b hindurchtretendes Licht. Bei relativ zur Vorrichtung 110 stehendem Muster ergibt sich eine Abtastbahn 149 auf dem Muster 12, welche von einem Halbkreisbogen gebildet wird, der abwechselnd in der einen und in der anderen Richtung unter Richtungsumkehr an den Endpunkten vom Abtaststrahl abgefahren wird.

In Fig. 8A sind gemäß Fig. 6 die Bahnpunkte A', B' und C' eingezeichnet, die den gegenstandsfesten Punkten A, B, C gemäß Fig. 2 bis 5 entsprechen. Ebenfalls eingezeichnet ist ein Punkt D', der dem Punkt D gemäß Fig. 2 unter entsprechender Umklappung einer Kreishälfte der Abtastkurve 48 entspricht. Wird nun das Muster 12 relativ zur Vorrichtung 110 in Richtung des Pfeils v bewegt, die zu dem die Punkte A' und C' verbindenden Durchmesser 150 parallel ist, so erhält man ein Abtastsignal ähnlich Fig. 3 und dementsprechend ein Dichtesignal ähnlich Fig. 4. Zur Wegstreckenbestimmung muß man nunmehr lediglich die Anzahl der Abtastimpulse N während der Bewegung des Abtaststrahles längs der nunmehr verzehrten Bahnkurve A', B', C' ermitteln und anschließend die Anzahl M der Abtastimpulse längs des Bahnstücks C', D', A'. Aufgrund des Weiterwanderns des Musters 12 unterhalb der Vorrichtung 110 deckt sich zwar das Bahnstück A', B', C' nicht mehr mit dem nächstfolgenden Bahnstück; die beiden Abtastbahnstücke liegen jedoch relativ eng nah zusammen, so daß der Meßfehler, welcher auf örtliche Schwankungen der Verteilungsdichte der Musterstrukturelemente zurückzuführen ist, noch relativ klein ist. Bei einer Vollkreisabtastung entsprechend Fig. 6 liegen die beiden Kreisbögen jedoch einander gegenüber, also möglicherweise in Bereichen, deren Musterstruktur-Verteilungsdichte möglicherweise wesentlich voneinander abweicht.

Im vorstehend beschriebenen Verfahren zur Wegstreckenmessung mittels der Vorrichtung 110 ist vorausgesetzt, daß der Durchmesser 150 gemäß Fig. 8 parallel zur Richtung der Geschwindigkeit v liegt; dementsprechend müssen die rechten Kanten 172a und 172b der beiden Halbblenden 170a und 170b parallel zur Geschwindigkeitsrichtung liegen. Im Falle variabler Richtung v müssen die Halbblenden 170a dementsprechend nachorientiert werden, wobei man ggf. zuerst eine Richtungsbestimmung gemäß vorstehend anhand Fig. 3 bis 5 beschriebenem Verfahren vornimmt. Hierzu kann das vom Photoelement 124 abgegebene Abtastsignal verwendet werden.

Die in Fig. 9 dargestellte, mit 210 bezeichnete erfindungsgemäße Vorrichtung zur Bewegungsmessung macht dieses mechanische Nachsteuern der Orientierung von Halbblenden entbehrlich. Diese Vorrichtung weist wiederum einen halbdurchlässigen Spiegel 260 sowie einen total reflektierenden Spiegel 262 zur Bildverdoppelung auf ebenso wie jeweils eine gesonderte rotierende Lochblende 220a bzw. 220b oberhalb der beiden Spiegel. Jedem der beiden Doppelbilder ist jedoch eine eigene Abtastoptik 222a und 222b zugeordnet, in deren jeweiligem bildseitigen Brennpunkt wiederum ein eigenes Photoelement 224a bzw. 224b angeordnet ist. Die beiden Lochblenden 220a und 220b rotieren wiederum mit gleicher Frequenz in gegenläufiger Richtung; der Achsabstand der beiden Blendenlöcher 230a bzw. 230b ist jeweils r. Bei stehendem Muster 12 gemäß Fig. 9A ergeben sich zwei Abtastbahnkurven 249a und 249b in Form miteinander zusammenfallender jedoch gegenläufig durchfahrener Kreise.

Die beiden Photoelemente 224a und 224b

geben jeweils Abtastsignale $f_a$ und $f_b$ ab, aus welchen jeweils gesondert in den in Fig. 9 angedeuteten Blöcken 280a und 280b das Dichtesignal $g_a$ bzw. $g_b$ abgeleitet wird. Daraufhin wird bei einem der Dichtesignale, z. B. dem Dichtesignal $g_a$, das Intervall C - A bestimmt und die Anzahl $M_a$ der Abtastimpulse in diesem Intervall ermittelt. Dementsprechend wird für das Dichtesignal $g_b$ das Intervall A - C bestimmt und die Anzahl $N_b$ der während dieses Intervalls auftretenden Abtastimpulse ermittelt. Dies ist symbolisch durch die Blöcke 282a und 282b angedeutet. Im folgenden Schritt (Block 284) wird s gemäß der eingetragenen Formel errechnet.

Falls man den Betrag der Geschwindigkeit v des Musters 12 relativ zum Gegenstand in Erfahrung bringen möchte, braucht man lediglich die Zeitableitung des auf die vorstehende Weise ermittelten Verschiebungsweges s zu bilden.

Mit den vorstehend beschriebenen erfindungsgemäßen Verfahren läßt sich für beliebige, periodische oder nicht periodische Muster die Richtung der Relativbewegung in bezug auf eine gegenstandsfeste Bezugsrichtung feststellen, wozu man wenigstens einen Abtaststrahl längs einer gekrümmten gegenstandsfesten Führungskurve bewegt, das sich ergebende Abtastsignal in ein Dichtesignal umwandelt und die Phasenlage des Dichtesignals, bezogen auf die Abtaststrahlbewegung längs der Führungskurve, feststellt. Der von der Führungskurve überstrichene Winkelbereich kann 360° betragen oder auch 180° oder weniger. Erwartet man beispielweise Richtungsschwankungen nur in einem relativ engen Winkelbereich, so genügt es, wenn das Führungsbahnkurvenstück einen geringfügig größeren Winkelbereich übersteigt. Dieser Winkelbereich muß jedoch so groß sein, daß die Phasenlage des Dichtesignals noch bestimmt werden kann, z. B. durch Feststellung der Lage erster oder höherer Ableitungen des Dichtesignals.

Bei der erfindungsgemäßen Wegstreckenbestimmung muß lediglich berücksichtigt werden, daß der bzw. die Abtaststrahlen bei ihrem Lauf entlang jeweils eines Teilstücks der Führungsbahn entweder stets mit dem Muster Laufen oder entgegen dem Muster. Die Führungsbahn kann gerade oder gekrümmt sein.

**Patentansprüche**

1. Verfahren zur berührungslosen Messung der Relativbewegung eines Gegenstandes gegenüber einem abtastbaren Muster, wobei man zur Erzeugung eines Abtastsignals aus einer Folge von den jeweils abgetasteten Musterstrukturelementen des Musters entsprechenden Abtastimpulsen die Abtastung des Musters mit Hilfe einer mit dem Gegenstand bewegten Vorrichtung vornimmt, die bei relativ zum Muster stillstehendem Gegenstand das Muster gemäß einer Führungsfunktion längs einer einer gegenstandsfesten Führungskurve entsprechenden Abtastbahn abtastet, so daß sich bei relativ zum Muster bewegten Gegenstand eine Abtastbahn als Überlagerung der Abtastbewegung längs der Führungskurve und der Relativbewegung von Muster und Gegenstand ergibt, wobei man ferner aus dem Abtastsignal ein Dichtesignal ableitet, welches den Zeitverlauf des Reziprokwertes des Zeitabstandes zwischen dem momentanen Abtastimpuls zum vorhergehenden Abtastimpuls angibt, und wobei die Phasenlage des Dichtesignals gegenüber der Führungsfunktion bestimmt, welche dem Winkel zwischen einer gegenstandsfesten Bezugsrichtung und der Richtung der Bewegung des Musters relativ zum Gegenstand entspricht.

2. Verfahren nach Anspruch 1, dadurch gekennzeichnet, daß man zur Winkelbestimmung einen Wendepunkt des Dichtesignals ermittelt.

3. Verfahren nach Anspruch 1 oder 3, dadurch gekennzeichnet, daß man zur Richtungsbestimmung feststellt, ob auf den Wendepunkt ein Dichtesignalminimum oder -maximum folgt.

4. Verfahren zur berührungslosen Messung der Relativbewegung eines Gegenstandes gegenüber einem abtastbaren Muster, wobei man zur Erzeugung eines Abtastsignals aus einer Folge von den jeweils abgetasteten Musterstrukturelementen des Musters entsprechenden Abtastimpulsen die Abtastung des Musters mit Hilfe einer mit dem Gegenstand bewegten Vorrichtung vornimmt, die bei relativ zum Muster stillstehendem Gegenstand das Muster gemäß einer Führungsfunktion längs zweier Führungskurvenstücke einer Führungskurve in bzw. entgegen der Bewegungsrichtung abtastet jeweils mit ein in Bewegungsrichtung hintereinanderliegenden Anfangs- und Endpunkten, so daß sich bei relativ zum Muster bewegten Gegenstand eine Abtastbahn als Überlagerung der Abtastbewegung längs der Führungskurve und der Relativbewegung von Muster und Gegenstand ergibt, und wobei man die Anzahl (M, N) der während der Bewegung des Abtaststrahles längs der beiden Führungskurvenstücke jeweils auftretenden Abtastimpulse des Abtastsignals ermittelt und den Quotienten aus der Differenz (M - N) und der Summe (M + N) der beiden Anzahlen (M, N) bestimmt, welcher zur Wegstrecke (f) proportional ist.

5. Verfahren nach Anspruch 4, dadurch gekennzeichnet, daß die beiden Führungskurvenstücke von Halbkreisbögen gebildet werden, die sich zu einem Kreis ergänzen oder die sich im wesentlichen decken, wobei der die Bogenenden verbindende Durchmesser zur Bewegungsrichtung des Musters gegenüber dem Gegenstand im wesentlichen parallel ist.

6. Verfahren nach Anspruch 5, dadurch gekennzeichnet, daß man die Abtastung gegenläufig entlang einer geschlossenen, vorzugsweise kreisförmigen Führungskurve durchführt, daß man von den hierdurch erhaltenen beiden Abtastsignalen jeweils das Dichtesignal ableitet und dessen Phasenlage bestimmt, daß man bei

einem der Dichtesignale die beiden zeitlich vor und nach einem Dichtesignalmaximum liegenden Dichtesignalwendepunkte sowie die Anzahl ($M_a$) der Abtastimpulse zwischen diesen Wendepunkten ermittelt, und daß man bei dem anderen Dichtesignal die beiden vor und nach einem Dichtesignalminimum liegenden Dichtesignalwendepunkte sowie die Anzahl ($N_b$) der Abtastimpulse zwischen diesen Wendepunkten ermittelt.

7. Vorrichtung zur berührungslosen Messung der Relativbewegung eines Gegenstands gegenüber einem abtastbaren Muster zur Durchführung des Verfahrens gemäß einem der vorhergehenden Ansprüche, gekennzeichnet durch wenigstens eine rotierende Lochblende (20; 120a) und 120b; 220a und 220b) im Strahlengang wenigstens einer Abtastoptik (22; 122; 222a und 222b), welche Blende den Abtaststrahl durch entsprechendes Ausblenden eines Bildausschnittes festlegt.

8. Vorrichtung nach Anspruch 7, gekennzeichnet durch einen vorzugsweise mit einem Photoelement (24; 124; 224a und 224b) gebildeten Lichtsensor im bildseitigen Brennpunkt der Abtastoptik (22; 122; 222a und 222b).

9. Vorrichtung nach Anspruch 7 oder 8, gekennzeichnet durch eine Anordnung zur Bildverdoppelung mit einem gegenüber der optischen Achse der Abtastoptik (122; 222a) geneigten teildurchlässigen Spiegel (160; 260) und einem zu diesem benachbart und parallel angeordneten vollreflektierenden Spiegel (162; 262) im Strahlengang dieser oder einer weiteren Abtastoptik (122; 222b).

10. Vorrichtung nach Anspruch 9, dadurch gekennzeichnet, daß je eine rotierende Lochblende (120a und 120b) und eine die Lochblende halb abdeckende Halbblende (170a und 170b) im Strahlengang zwischen dem teildurchlässigen Spiegel (160) und dem zugeordneten Lichtsensor (124) und im Strahlengang zwischen dem vollreflektierenden Spiegel (162) und dem zugeordneten Lichtsensor (124) vorgesehen ist, und daß die Lochblenden (120a und 120b) gegenläufig rotieren, um das Muster (12) entlang im wesentlichen identischer halbkreisförmiger Führungskurven (A' B' C' ; C' D' A') abzutasten.

11. Vorrichtung nach Anspruch 10, gekennzeichnet durch einen beiden Lochblenden (12a und 12b) zugeordneten Lichtsensor (124).

12. Vorrichtung nach Anspruch 10 oder 11, gekennzeichnet durch eine beiden Lochblenden (120a und 120b) zugeordnete Abtastoptik (122).

13. Vorrichtung nach einem der Ansprüche 7 bis 9, dadurch gekennzeichnet, daß je eine rotierende Lochblende (220a und 220b) im Strahlengang zwischen dem teildurchlässigen Spiegel (260) und einem ersten Lichtsensor (224a) und im Strahlengang zwischen dem vollreflektierenden Spiegel (262) und einem zweiten Lichtsensor (224b) vorgesehen ist, und daß die Lochblenden (220a und 220b) gegenläufig rotieren und zwei Abtaststrahlen festlegen, um das Muster entlang zweier im wesentlichen identischer vollkreisförmiger Führungskurven abzutasten.

**Claims**

1. A method for the contactless measurement of the relative movement of an object in respect of a scannable pattern, in which in order to produce a scanning signal from a sequence of scanning pulses corresponding in each case to the scanned structural elements of the pattern, the pattern is scanned by means of a device which is moved together with the object and which, when the object is stationary in relation to the pattern, scans the pattern according to a guide function along a scanning path corresponding to a guide curve which is rigid with the object, so that when the object is moved in relation to the pattern, a scanning path is created as a superimposition of the scanning movement along the guide curve and the relative movement of pattern and object, there being furthermore derived from the scanning signal a density signal which indicates the time-related pattern of the reciprocal value of the time interval between the scanning pulse at any given time in respect of the preceding scanning pulse, determining the phase situation of the density signal in respect of the guide function, which corresponds to the angle between a reference direction rigid with the object and the direction of the movement of the pattern in relation to the object.

2. A method according to Claim 1, characterised in that a turning point of the density signal is ascertained in order to determine the angle.

3. A method according to Claim 1 or 2, characterised in that to determine direction, it is essential to establish whether a density signal minimum or maximum is present at the turning point.

4. A method for the contactless measurement of the relative movement of an object in respect of a scannable pattern, in which in order to produce a scanning signal from a sequence of scanning pulses corresponding in each case to the scanned structural elements of the pattern, the pattern is scanned by means of a device which is moved together with the object and which, when the object is stationary in relation to the pattern, scans the pattern according to a guide function along two guide curve portions of a guide curve in or against the direction of movement, in each case with starting and finishing points situated one after another in the direction of movement so that in the case of an object which is moving in relation to the pattern, a scanning path is created as a superimposition of the scanning movement along the guide curve and the relative movement of the pattern and the object, and in that the number (M, N) of scanning pulses occurring in the scanning signal during movement of the scanning beam along the two guide curve portions is ascertained, the quotients being determined from the difference (M - N) and the sum (M + N) of the two numbers (M, N), which is proportional to the path (f),

5. A method according to Claim 4, characterised in that the two guide curve portions comprise semi-circular arcs which supplement each other to form a circle or which substantially coincide, the diameter connecting the arc ends being substantially parallel with the direction of movement of the pattern in relation to the object.

6. A method according to Claim 5, characterised in that scanning is carried out in the opposite direction along a closed and preferably circular guide curve and in that from the two scanning signals retained in the process, the respective density signal is derived and its phase situation determined and in that in the case of one of the density signals, the two density signal turning points disposed in time before and after a density signal maximum, as well as the number ($M_a$) of scanning pulses between these turning points are ascertained and in that in the case of the other density signal, the two density signal turning points before and after a density signal minimum are ascertained as well as the number ($N_b$) of scanning pulses between these turning points.

7. An apparatus for the contactless measurement of the relative movement of an object in relation to a scannable pattern for carrying out the method according to one of the preceding Claims, characterised by at least one rotating perforated diaphragm (20, 120a) and 120b, 220a and 220b) in the beam from at least one optical scanning unit (22, 122, 222a and 222b), which diaphragm establishes the scanning beam by appropriately fading out one portion of the image.

8. An apparatus according to Claim 7, characterised by a light sensor formed preferably with a photoelectric element (24, 124, 224a and 224b) and disposed in the image-side focal point of the optical scanning unit (22, 122, 222a and 222b).

9. An apparatus according to Claim 7 or 8, characterised by an arrangement for image duplication with a partially transmissive mirror (160, 260) which is inclined to the optical axis of the optical scanning system (122, 222a) and a fully reflecting mirror (162, 262) disposed parallel with and adjacent to the partially transmissive mirror, in the path of the beam from this or a further optical scanning unit (122, 222b).

10. An apparatus according to Claim 9, characterised in that respective rotating perforated diaphragms (122a and 122b) and, half masking the perforated diaphragms, semi-diaphragms (170a and 170b) are disposed in the path of the beams between the partially transmissive mirror (160) and the associated light sensor (124) and in the path of the beam between the fully reflecting mirror (162) and the associated light sensor (124), and in that the perforated diaphragms (122a and 122b) rotate in opposite directions in order to scan the pattern (12) along substantially identical semi-circular guide curves (A' B' C' ; C' D' A').

11. An apparatus according to Claim 10, characterised by a light sensor (124) associated with both perforated diaphragms (12a and 12b).

12. An apparatus according to Claim 10 or 11, characterised by an optical scanning unit (122) associated with both perforated diaphragms (120a and 120b).

13. An apparatus according to one of Claims 7 to 9, characterised in that respective rotating perforated diaphragms (220a and 220b) are disposed in the path of the beam between the partially transmissive mirror (260) and a first light sensor (224a) and in the path of the beam between the fully reflecting mirror (262) and a second light sensor (224b) and in that the perforated diaphragms (220a and 220b) rotate in opposite directions and establish two scanning beams in order to scan the pattern along two substantially identical and circular guide curves.

**Revendications**

1. Procédé pour la mesure sans contact du mouvement relatif d'un objet par rapport à un modèle balayable, dans lequel, afin de produire un signal de balayage à partir d'une succession d'impulsions de balayage qui correspondent aux éléments structurels respectivement balayés du modèle, on entreprend le balayage du modèle à l'aide d'un dispositif déplacé avec l'objet, dispositif qui, lorsque l'objet est stationnaire par rapport au modèle, balaye le modèle, conformément à une fonction de guidage, le long d'une trajectoire de balayage correspondant à une courbe de guidage solidaire de l'objet, de sorte que, lorsque l'objet est déplacé par rapport au modèle, on obtient une trajectoire de balayage comme superposition du mouvement de balayage le long de la courbe de guidage et du mouvement et du relatif du modèle et de l'objet, et dans lequel, en outre, on déduit du signal de balayage un signal de densité qui indique l'allure dans le temps de la valeur réciproque de l'intervalle de temps entre l'impulsion de balayage momentanée et l'impulsion de balayage précédente, et on détermine la position de phase du signal de densité par rapport à la fonction de guidage, position qui correspond à l'angle entre une direction de référence solidaire de l'objet et la direction de déplacement du modèle par rapport à l'objet.

2. Procédé selon la revendication 1, caractérisé en ce qu'afin de déterminer l'angle, on détermine un point d'inflexion du signal de densité.

3. Procédé selon la revendication 1 ou 2, caractérisé en ce qu'afin de déterminer la direction, on établit si le point d'inflexion est suivi d'un minimum ou d'un maximum de signal de densité.

4. Procédé pour la mesure sans contact du mouvement relatif d'un objet par rapport à un modèle balayable, dans lequel, afin de produire un signal de balayage à partir d'une succession d'impulsions de balayage qui correspondent aux éléments structurels respectivement balayés du modèle, on entreprend le balayage du modèle à

l'aide d'un dispositif déplacé avec l'objet, dispositif qui, lorsque l'objet est stationnaire par rapport au modèle, balaye le modèle, conformément à une fonction de guidage, le long de deux tronçons d'une courbe de guidage situés respectivement dans le sens de déplacement et dans le sens opposé, avec à chaque fois un point initial et un point final qui se succèdent dans le sens de déplacement, de sorte que, lorsque l'objet est déplacé par rapport au modèle, on obtient une trajectoire de balayage comme superposition du mouvement de balayage le long de la courbe de guidage et du mouvement relatif du modèle et de l'objet, et dans lequel, en outre, on détermine le nombre (M, N) des impulsions de balayage du signal de balayage qui apparaissent respectivement pendant le déplacement du faisceau de balayage le long de chacun des deux tronçons de courbe de guidage, et on détermine le quotient de la différence (M - N) et de la somme (M + N) des deux nombres (M, N), quotient qui est proportionnel à la distance parcourue (f).

5. Procédé selon la revendication 4, caractérisé en ce que les deux tronçons de courbe de guidage sont formés par des demi-arcs de cercle qui se complètent pour former un cercle ou qui se recouvrent sensiblement, le diamètre reliant les extrémités des arcs étant sensiblement parallèle à la direction de déplacement du modèle par rapport à l'objet.

6. Procédé selon la revendication 5, caractérisé en ce qu'on réalise le balayage en sens contraire le long d'une courbe de guidage fermée, de préférence circulaire, en ce qu'on déduit, de chacun des deux signaux de balayage ainsi obtenus, le signal de densité respectif, et on détermine sa position de phase, en ce qu'on détermine, pour l'un des signaux de densité, les deux points d'inflexion du signal de densité qui se situent, dans le temps, avant et après un maximum de signal de densité, ainsi que le nombre ($M_a$) des impulsions de balayage entre ces points d'inflexion, et en ce qu'on détermine, pour l'autre signal de densité, les deux points d'inflexion du signal de densité qui se situent avant et après un minimum de signal de densité, ainsi que le nombre ($N_b$) des impulsions de balayage entre ces points d'inflexion.

7. Dispositif pour la mesure sans contact du mouvement relatif d'un objet par rapport à un modèle balayable, pour la mise en oeuvre du procédé selon l'une des revendications précédentes, caractérisé par au moins un diaphragme perforé rotatif (20, 120a et 120b; 220a et 220b) sur le trajet des rayons d'au moins une optique de balayage (22; 122; 222a et 222b), diaphragme perforé qui détermine le faisceau de balayage par la suppression adéquate d'une partie d'image.

8. Dispositif selon la revendication 7, caractérisé par un détecteur de lumière constitué de préférence par un élément photo-électrique (24; 124, 224a et 224b), au foyer côté image de l'optique de balayage (22; 122; 222a et 222b).

9. Dispositif selon la revendication 7 ou 8, caractérisé par un agencement pour doubler l'image, avec un miroir partiellement translucide (160, 260) incliné par rapport à l'axe optique de l'optique de balayage (122; 222a), et un miroir entièrement réfléchissant (162; 262) disposé au voisinage du précédent et parallèlement à ce dernier, sur le trajet des rayons de cette optique de balayage ou d'une optique de balayage supplémentaire (122; 222b).

10. Dispositif selon la revendication 9, caractérisé en ce qu'il est prévu un diaphragme perforé rotatif respectif (120a et 120b), et un demi-diaphragme (170a et 170b) recouvrant à moitié le diaphragme perforé, sur le trajet des rayons entre le miroir partiellement translucide (160) et le détecteur de lumière (124) associé, et sur le trajet des rayons entre le miroir entièrement réfléchissant (162) et le détecteur de lumière (124) associé, et en ce que les diaphragmes perforés (120a et 120b) tournent en sens contraires, afin de balayer le modèle (12) le long de courbes de guidage semi-circulaires sensiblement identiques (A' B' C'; C' D' A').

11. Dispositif selon la revendication 10, caractérisé par un détecteur de lumière (124) associé aux deux diaphragmes perforés (120a et 120b).

12. Dispositif selon la revendication 10 ou 11, caractérisé par une optique de balayage (122) associée aux deux diaphragmes perforés (120a et 120b).

13. Dispositif selon l'une des revendications 7 à 9, caractérisé en ce qu'il est prévu un diaphragme perforé rotatif respectif (220a et 220b), sur le trajet des rayons entre le miroir partiellement translucide (260) et un premier détecteur de lumière (224a), et sur le trajet des rayons entre le miroir entièrement réfléchissant (262) et un deuxième détecteur de lumière (224b), et en ce que les diaphragmes perforés (220a et 220b) tournent en sens contraires et déterminent deux faisceaux de balayage, afin de balayer le modèle le long de deux courbes de guidage en forme de cercles complets sensiblement identiques.

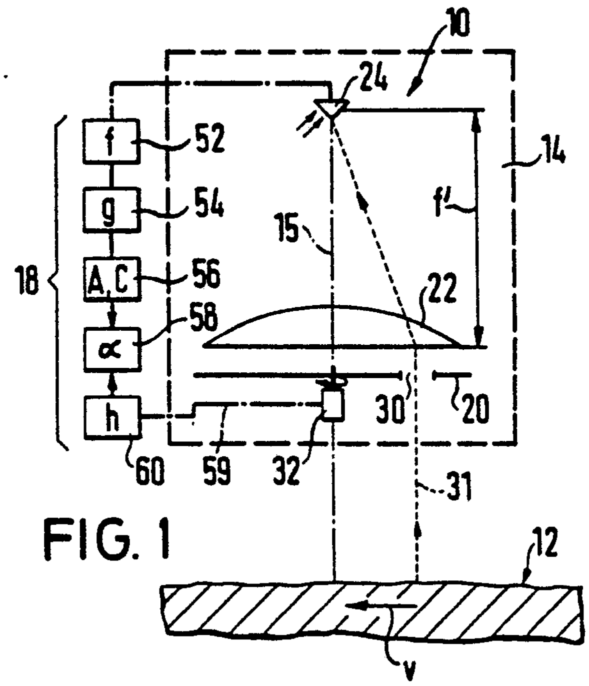


FIG. 1

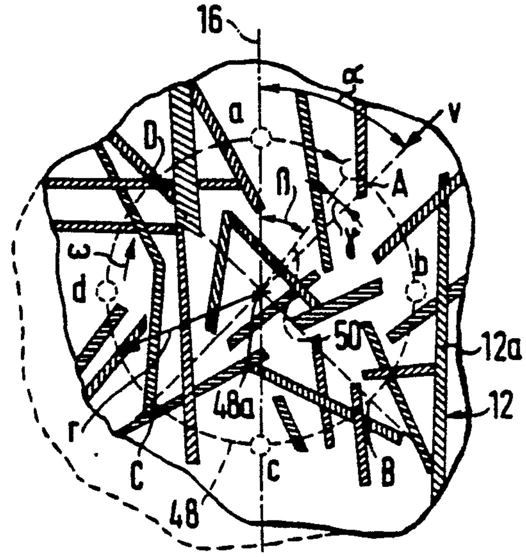


FIG. 2

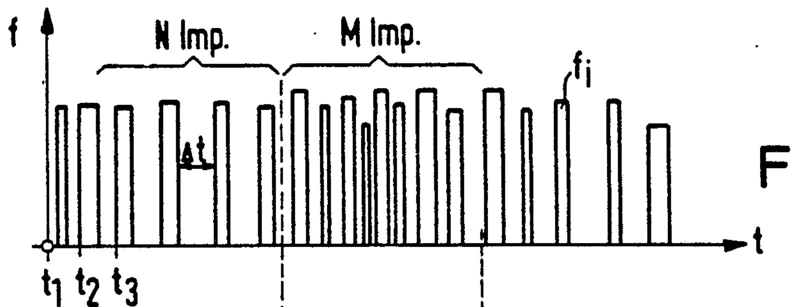


FIG. 3

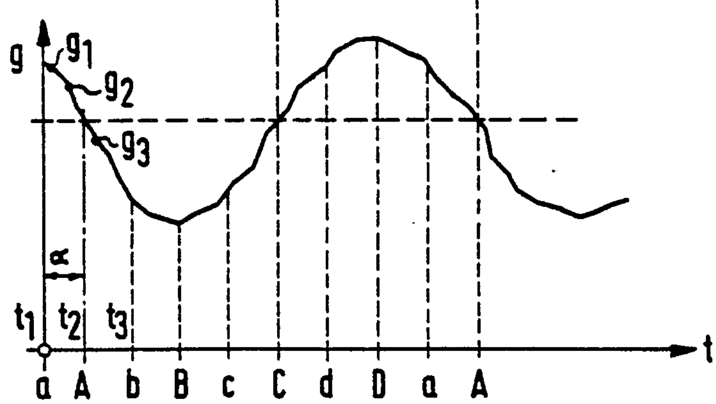


FIG. 4

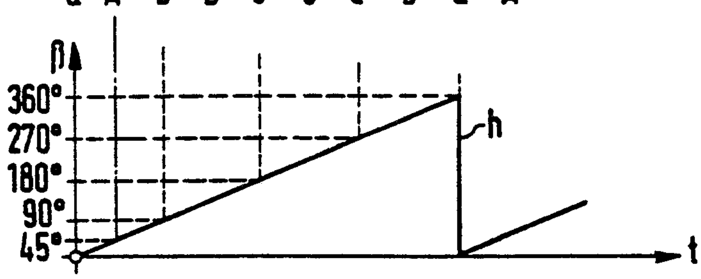


FIG. 5

FIG. 6

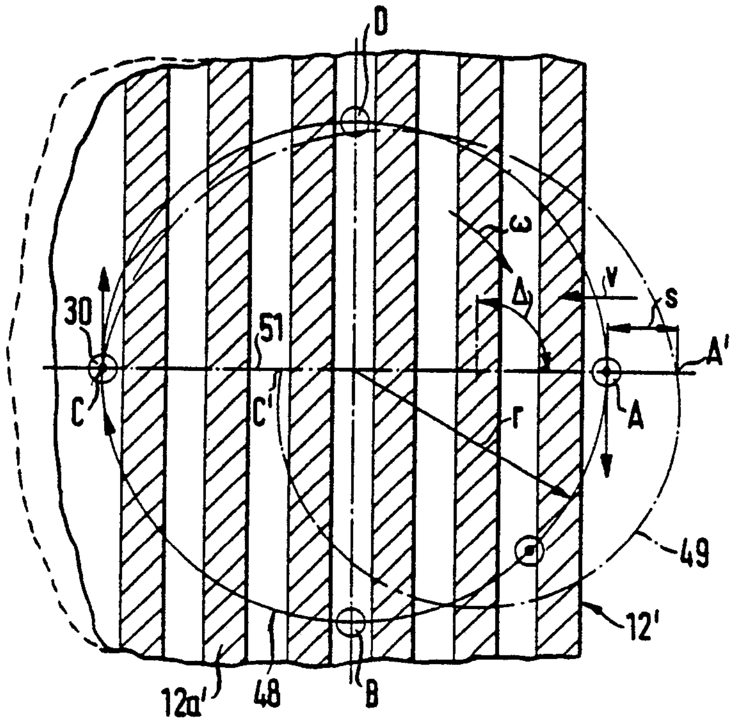


FIG. 6A

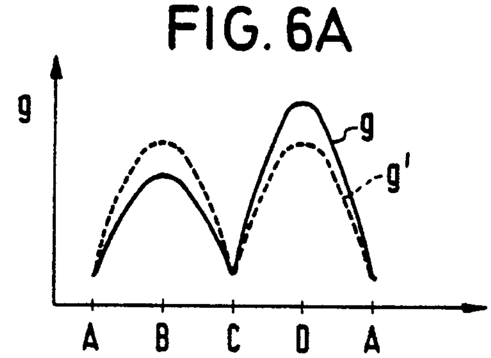

FIG. 7

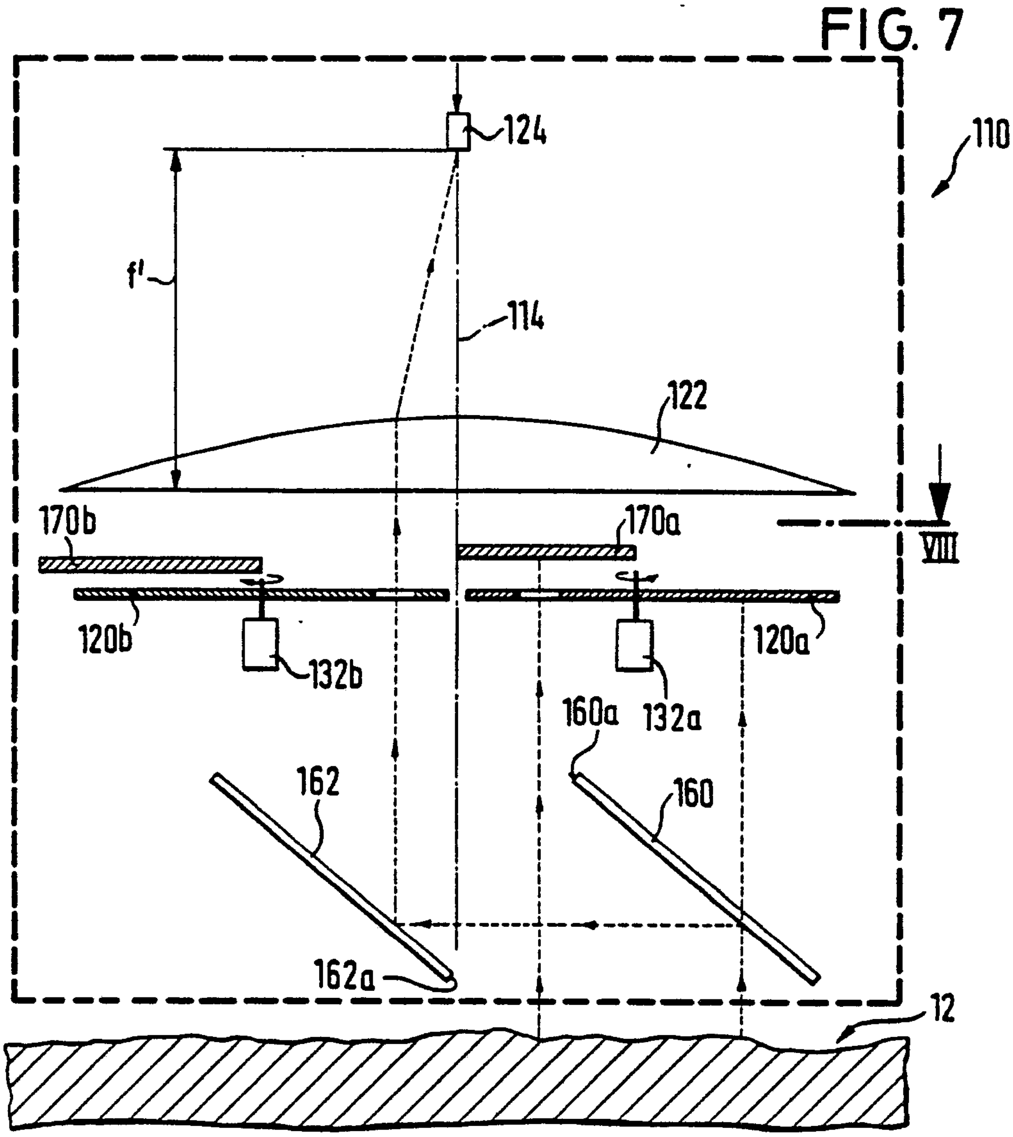


FIG. 8

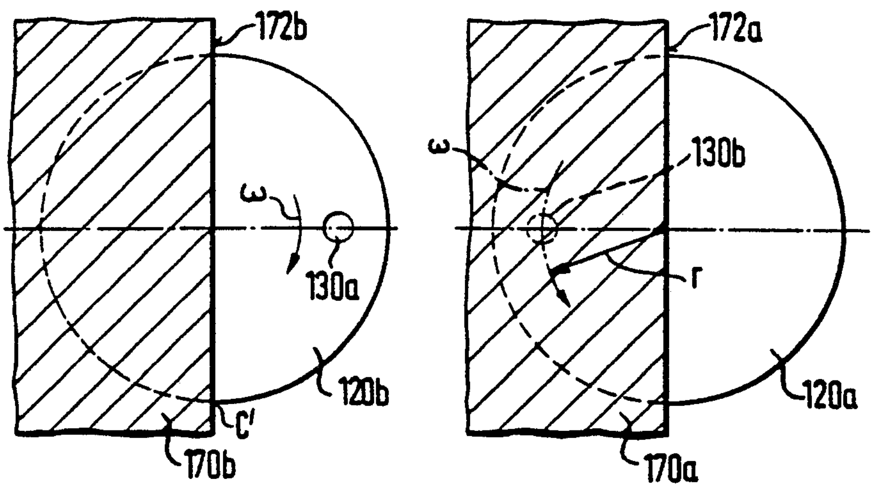


FIG. 8A

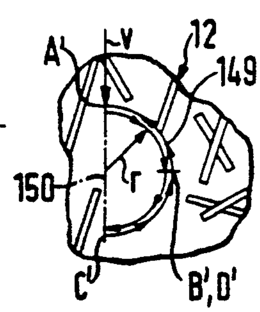

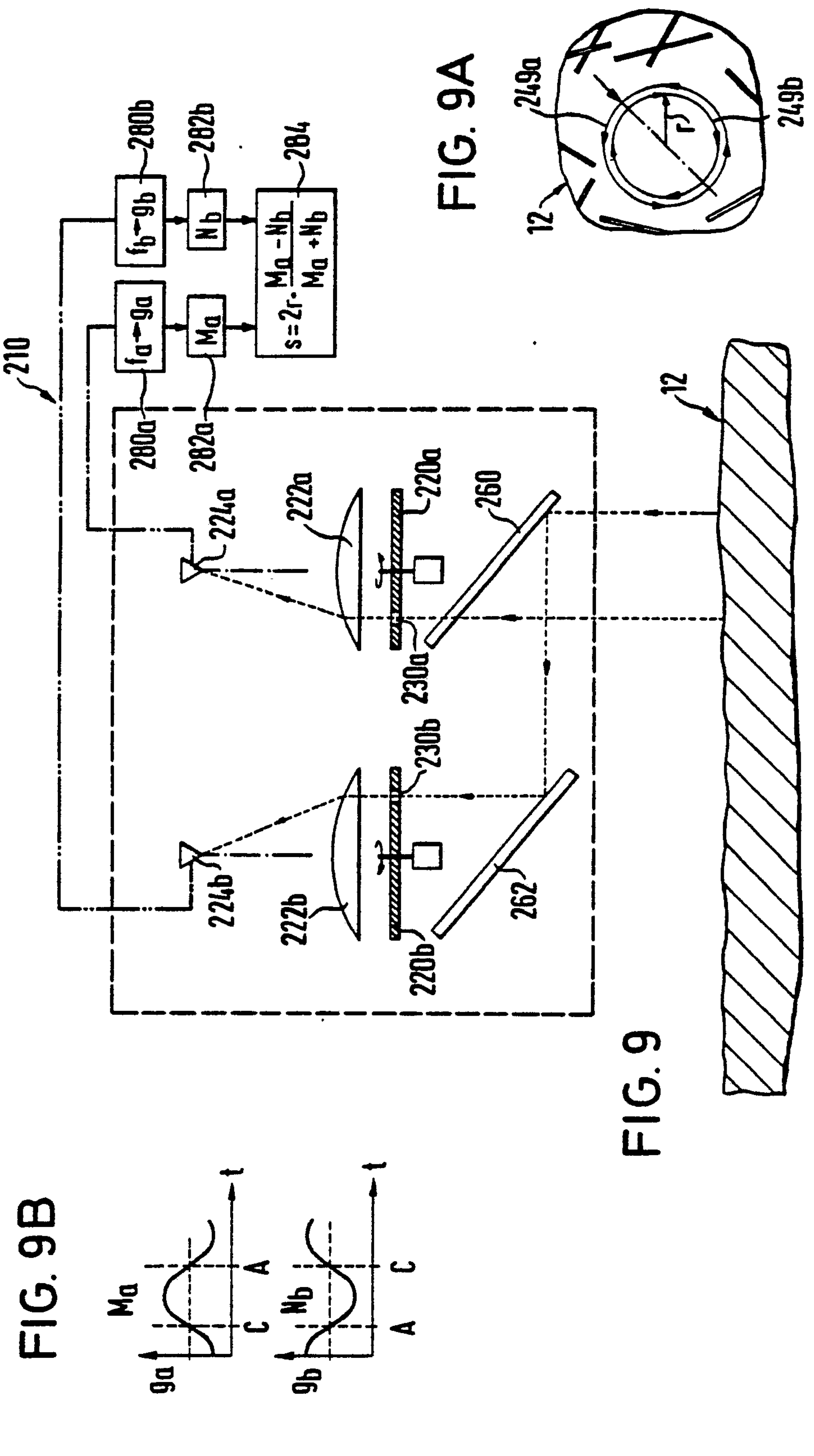
FIG. 9
FIG. 9A
FIG. 9B
210
280a
282a
280b
282b
284
$f_a \to g_a$
$f_b \to g_b$
$M_a$
$N_b$
$s = 2r \cdot \frac{M_a - N_b}{M_a + N_b}$
224a
222a
220a
230a
260
224b
222b
220b
230b
262
12
249a
249b
r
$g_a$
$g_b$
A
C
t